# FASCICULE DE BREVET EUROPEEN

(11) **EP 4 399 394 B1**
(45) Date de publication et mention de la délivrance du brevet: **25.06.2025**
(21) Numéro de dépôt: 22782913.2
(22) Date de dépôt: 05.09.2022
(51) Int. Cl.: F01D 5/02, F01D 5/14, F01D 5/28, B64C 11/00, F04D 29/66, G01M 1/36

(54) **PROCÉDÉ DE CORRECTION DU POIDS MOMENT RADIAL D'UNE AUBE POUR UNE TURBOMACHINE D'AÉRONEF**
VERFAHREN ZUR KORREKTUR DES MOMENTGEWICHTS EINER LAUFSCHAUFEL FÜR EINE FLUGZEUGTURBOMASCHINE
METHOD OF CORRECTION OF THE RADIAL MOMENT WEIGHT OF A BLADE FOR AN AIRCRAFT TURBOMACHINE

(30) Priorité: 10.09.2021 FR 2109492
(43) Date de publication de la demande: 17.07.2024
(73) Titulaire: SAFRAN AIRCRAFT ENGINES, 75015 Paris (FR)
(72) Inventeur: LAUWICK, Lucas Antoine Christophe, 77550 MOISSY-CRAMAYEL (FR); MOUROT, Maxime Mathieu, 77550 MOISSY-CRAMAYEL (FR); QUEANT, Didier, 77550 MOISSY-CRAMAYEL (FR)
(74) Mandataire: Gevers & Orès
(86) Numéro de dépôt international: PCT/FR2022/051667
(87) Numéro de publication internationale: WO 2023/037065

(56) Documents cités:
- EP-A2- 3 812 547
- FR-A1- 2 906 320
- FR-A1- 2 962 483
- FR-A1- 2 989 991
- FR-A1- 3 026 033
- FR-A1- 3 102 378
- GB-A- 2 484 726
- US-A1- 2014 030 106
- US-A1- 2014 030 107

## Description

### Domaine technique de l'invention

L'invention se rapporte au domaine technique des aubes pour les turbomachines d'aéronef, en particulier des aubes de soufflante. L'invention concerne un procédé de correction du poids moment radial d'une aube pour une turbomachine d'aéronef.

### Arrière-plan technique

L'état de la technique est illustré par les documents FR-A1-2906320, FR-A1-2962483, GB-A-2484726, FR-A1-2989991, FR-A1-3026033, FR-A1-3102378, US-A1-2014030106, US-A1-2014030107 et EP-A2-3812547.

De manière bien connue, une turbomachine d'aéronef s'étend selon un axe longitudinal et comprend d'amont en aval dans le sens d'écoulement des gaz, une soufflante, un compresseur basse pression et un compresseur haute pression, une chambre annulaire de combustion, une turbine haute pression et une turbine basse pression et enfin une tuyère d'échappement des gaz.

La soufflante est composée d'un disque central tournant autour d'un axe de rotation. L'axe de rotation est par exemple l'axe longitudinal de la turbomachine. Le disque central est surmonté par une pluralité d'aubes permettant la compression initiale de l'air entrant dans la turbomachine. Les aubes sont entourées par un carter de rétention permettant de retenir les aubes en cas de rupture de ces dernières.

Une aube de soufflante est généralement composée d'une pale présentant un profil aérodynamique comprenant un bord d'attaque et un bord de fuite reliés par une face intrados et une face extrados opposée à la face intrados. La pale comprend par ailleurs une extrémité supérieure et une extrémité inférieure opposée reliée à un pied. Le pied est destiné à coopérer avec une alvéole correspondante du disque central pour fixer l'aube sur le disque central.

Par ailleurs, afin de réduire le poids de la soufflante, la pale de l'aube est par exemple réalisée en un matériau composite, typiquement un matériau composite à matrice organique (CMO). Le matériau composite comprend une matrice polymérique par exemple, une matrice thermoplastique ou thermodurcissable et des fibres telles que des fibres de carbone ou des fibres de verre noyées dans la matrice.

En outre, afin de protéger le bord d'attaque de l'usure par érosion et/ou de la dégradation causée par des chocs avec des corps étrangers, le bord d'attaque est recouvert d'un bouclier de protection métallique. Le bouclier est assemblé et fixé sur le bord d'attaque par collage. A cet effet, le bord d'attaque ou le bouclier est revêtu d'une couche de colle, puis le bouclier est assemblé sur le bord d'attaque. L'ensemble est ensuite soumis à un traitement thermique afin d'assurer la polymérisation de la couche de colle. Le bouclier est ainsi fixé sur le bord d'attaque.

Après la fabrication, chaque aube est montée sur le disque central en fonction de son inertie propre et de son inertie relative par rapport aux aubes voisines. Ce montage méticuleux est classiquement dénommé « équilibrage ». L'équilibrage de la soufflante est primordial pour éviter que la rotation n'induise un effort perpendiculaire à l'axe de rotation et n'use prématurément le disque central et la turbomachine, ainsi que pour un meilleur rendement et une performance optimale.

Pour équilibrer la soufflante, il est nécessaire d'équilibrer les forces générées par les aubes relativement à l'axe de rotation. La force générée par une aube est appelée « poids moment radial » (« radial moment weight » (RMW) en anglais). Le poids moment radial d'une aube est égal à la masse de l'aube multipliée par la distance entre le centre de gravité de l'aube et l'axe de rotation. Lorsque le poids moment radial de chaque aube est égal à celui des autres, alors le rotor de la soufflante est parfaitement équilibré. La durée de vie du rotor dépend en partie de son équilibrage : plus le rotor est équilibré, moins il s'use vite.

Cependant, les procédés de fabrication des aubes résultent en une dispersion importante du poids moment radial des aubes. Ainsi, afin d'équilibrer parfaitement le rotor, il est connu d'ajouter des masselottes d'équilibrage dans le cône du module de la soufflante lors du montage de la soufflante sur la turbomachine. Sans un tel équilibrage, un balourd apparait et le rotor s'use de manière prématurée.

Cette solution n'est pas entièrement satisfaisante en ce qu'elle permet d'ajuster le poids moment radial sur le jeu d'aubes complet de la soufflante, c'est-à-dire après le montage de la soufflante et non sur les aubes de manière individuelle avant leur montage. Par ailleurs, cette solution met en œuvre des pièces rapportées ce qui complexifie le montage de la soufflante.

Par conséquent, il existe un besoin de fournir un procédé permettant de limiter la dispersion du poids moment radial des aubes afin de faciliter le montage de la soufflante tout en garantissant l'équilibrage de cette dernière.

### Résumé de l'invention

A cet effet, l'invention propose un procédé de correction du poids moment radial d'une aube pour une turbomachine d'aéronef, le procédé comprenant les étapes suivantes :
(a) fournir une aube s'étendant suivant un axe d'allongement Z entre une extrémité libre opposée à un pied, l'aube comprenant une pale en matériau composite présentant un bord d'attaque, un bord de fuite relié au bord d'attaque par une face extrados et une face intrados opposée à la face extrados, l'aube comprenant en outre un bouclier de protection fixé sur le bord d'attaque,
(b) mesurer le poids moment radial de l'aube,
(c) comparer le poids moment radial mesuré à une valeur de référence et ajuster le poids moment radial de l'aube en fonction du résultat de la comparaison.

Le procédé est caractérisé en ce que, à l'étape (a), l'aube comprend au moins une cavité d'ajustement s'étendant le long du bord d'attaque et débouchant sur l'extrémité libre de l'aube, et en ce que, à l'étape, l'ajustement est réalisé par insertion d'un premier matériau dans la cavité d'ajustement.

Selon l'invention, le poids moment radial de l'aube est mesuré une première fois après sa fabrication, puis comparé à une valeur de référence. Le poids moment radial est alors ajusté pour correspondre à la valeur de référence. En effet, la cavité d'ajustement permet l'ajout d'au moins un premier matériau pour ajuster le poids moment radial de l'aube. Le poids moment radial de chaque aube peut alors être ajusté au cas par cas permettant ainsi de limiter la dispersion du poids moment radial des aubes. Les risques de création d'un balourd lors du montage des aubes sur la soufflante sont par conséquent réduits et il n'est plus nécessaire d'ajouter des masselottes d'équilibrage. Par ailleurs, la cavité est accessible via l'extrémité de l'aube ce qui facilite l'insertion du premier matériau en fin de fabrication de l'aube. Un tel procédé permet également un ajustement précis du poids moment radial de l'aube. En effet, le poids moment radial de l'aube est mesuré à la fin de la phase de fabrication de l'aube ce qui permet de déterminer avec précision l'ajustement nécessaire à réaliser.

Le procédé selon l'invention peut comprendre une ou plusieurs des caractéristiques suivantes, prises isolément les unes des autres ou en combinaison les unes avec les autres :
- à l'étape (c) l'ajustement est réalisé par insertion d'un second matériau dans la cavité d'ajustement, la densité du premier matériau étant différente de la densité du second matériau ;
- le premier matériau est du plomb ;
- la quantité du premier matériau est comprise entre 5g et 50g, et de préférence entre 10g et 30g ;
- la cavité d'ajustement est ménagée dans le bouclier de protection ;
- le bouclier de protection comprend une première ailette latérale s'étendant sur au moins une partie de la face extrados, une seconde ailette latérale s'étendant sur au moins une partie de la face intrados, une portion centrale reliant les première et seconde ailettes latérales et s'étendant le long du bord d'attaque suivant l'axe d'allongement, la cavité d'ajustement étant ménagée dans la portion centrale ;
- la cavité d'ajustement s'étend sur toute la hauteur du bord d'attaque suivant l'axe d'allongement ;
- l'aube comprend une couche de colle disposée entre la pale et le bouclier de protection, la cavité d'ajustement étant ménagée dans la couche de colle ;
- l'étape (a) comprend la sous-étape (a1) suivante : former la cavité d'ajustement dans l'aube ;
- à la fin de la sous-étape (a1), la cavité d'ajustement présente une extrémité longitudinale supérieure opposée au pied et une extrémité longitudinale inférieure opposée à l'extrémité longitudinale supérieure suivant l'axe longitudinale qui sont fermées, et en ce que le procédé comprend, après la sous-étape (a1), la sous-étape (a2) suivante : découper ou retirer une portion d'extrémité de l'aube, opposée au pied, de façon à ouvrir l'extrémité longitudinale supérieure de la cavité d'ajustement.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une représentation schématique d'une demi turbomachine d'aéronef ;
[Fig.2] la figure 2 est une représentation schématique en perspective d'une aube selon l'invention ;
[Fig.3] la figure 3 est une vue partielle en coupe transversale de l'aube de la figure 2 dans laquelle la cavité d'ajustement a été omise à des fins de clarté ;
[Fig.4] la figure 4 est une représentation schématique d'une partie d'une aube selon un premier mode de réalisation de l'invention;
[Fig.5] la figure 5 est une vue en coupe transversale du bouclier de protection selon le premier mode de réalisation de l'invention ;
[Fig.6] la figure 6 est une vue partielle en coupe transversale de l'aube de la figure 4 ;
[Fig.7] la figure 7 est une représentation schématique d'une partie d'une aube selon un second mode de réalisation de l'invention ;
[Fig.8] la figure 8 est une vue en coupe transversale de l'aube de la figure 7 ;
[Fig.9] la figure 9 est une représentation schématique partielle de l'aube de la figure 7 dans une étape du procédé ;
[Fig.10] la figure 10 est un schéma synoptique d'un procédé de fabrication de l'aube du premier mode de réalisation ;
[Fig.11] la figure 11 est un schéma synoptique d'un procédé de fabrication de l'aube du second mode de réalisation.

### Description détaillée de l'invention

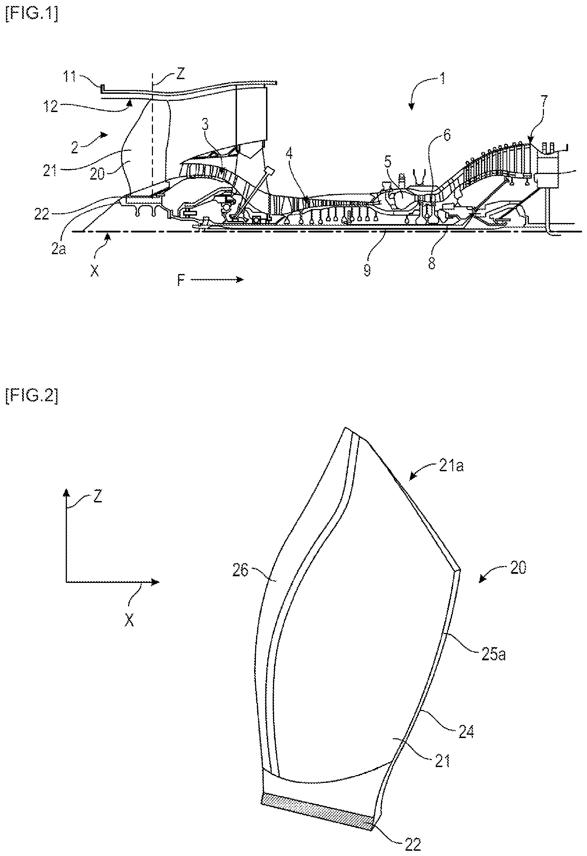

Une turbomachine 1 d'aéronef est par exemple représentée sur la figure 1. La turbomachine 1 s'étend selon un axe longitudinal X. La turbomachine 1 comprend d'amont en aval dans le sens d'écoulement des gaz F, une soufflante 2, un compresseur basse pression 3, un compresseur haute pression 4, au moins une chambre annulaire de combustion 5, une turbine haute pression 6, une turbine basse pression 7 et une tuyère d'échappement des gaz (non représentée)..

La turbine haute pression 6 comprend un rotor qui entraine en rotation un rotor du compresseur haute pression 4 par l'intermédiaire d'un arbre haute pression 8. La turbine basse pression 7 comprend un rotor qui entraine en rotation le rotor du compresseur basse pression 3 et de la soufflante 2 par l'intermédiaire d'un arbre basse pression 9.

Le rotor de la soufflante 2 est composé d'un disque 2a central surmonté par une pluralité d'aubes 20 régulièrement réparties sur la circonférence du disque 2a central. Le disque 2a est mobile en rotation autour de l'axe longitudinal X. Les aubes 20 de la soufflante 2 sont par exemple entourées par un carter de rétention 11 destiné à retenir les aubes 20 en cas de rupture de celles-ci. Le carter de rétention 11 présente une surface interne revêtue d'une couche d'un matériau abradable 12. La couche de matériau abradable 12 est une couche qui est apte à s'user par frottements avec les aubes 20. Les aubes 20 selon l'invention sont donc par exemple des aubes 20 de la soufflante 2.

Comme mieux visible sur la figure 2, l'aube 20 comprend une pale 21 et un bouclier de protection 26. La pale 21 est par exemple solidaire d'un pied 22.

L'aube 20 s'étend selon un axe d'allongement Z. L'axe d'allongement Z s'étend transversalement par rapport à l'axe longitudinal X de la turbomachine 1. L'aube 20 présente une extrémité libre 21a opposée au pied 22. L'extrémité libre 21a est en vis-à-vis de la couche abradable 12. Le pied 22 coopère avec une alvéole (non représentée) correspondante du disque 2a afin de fixer l'aube 20 sur le disque 2a.

La pale 21 est en matériau composite. Le matériau composite comprend une matrice et des fibres noyées dans la matrice. Le matériau composite est par exemple un composite à matrice organique (CMO). La matrice est par exemple une matrice polymérique thermoplastique ou thermodurcissable. Les fibres sont par exemple des fibres de carbone ou des fibres de verre. Les fibres sont par exemple organisées sous la forme d'une préforme fibreuse. La pale 21 est par exemple réalisée par moulage par transfert de résine, par moulage par injection ou encore par drapage.

La pale 21 présente un profil aérodynamique. La pale 21 comprend un bord d'attaque 23 et un bord de fuite 24 reliés par une face extrados 25a et une face intrados 25b opposée à la face extrados 25a.

Le bouclier de protection 26 est fixé sur la pale 21. Le bouclier de protection 26 est par exemple métallique. Le matériau métallique est par exemple du titane.

Le bouclier de protection 26 présente une forme allongée suivant l'axe d'allongement Z et s'étend le long de la pale 21, et en particulier le long du bord d'attaque 23.

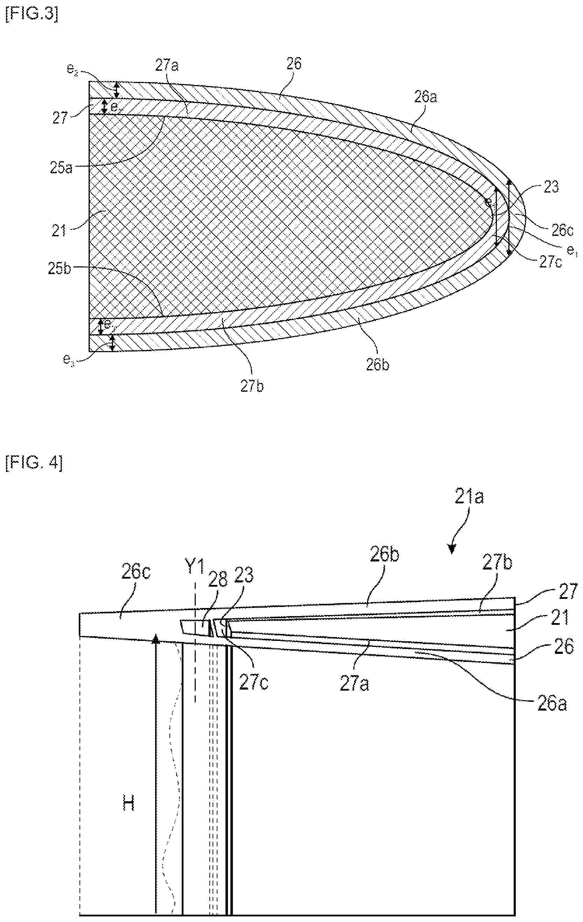

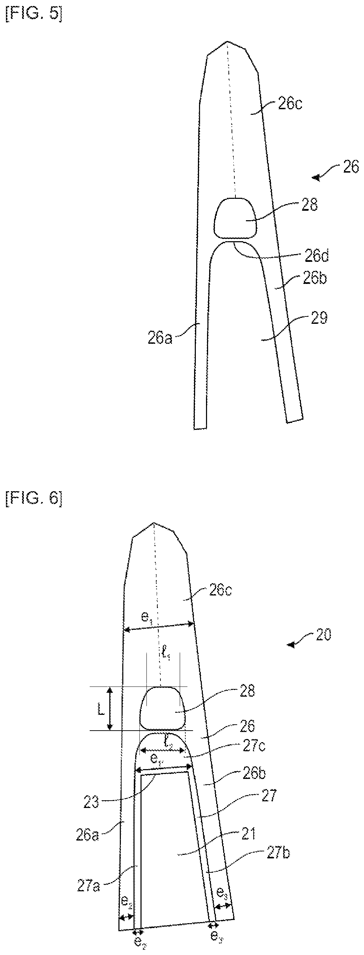

Comme mieux visible sur la figure 3, le bouclier de protection 26 présente une section en forme de dièdre et comprend une première ailette latérale 26a et une seconde ailette latérale 26b. Les première et seconde ailettes latérales 26a, 26b sont reliées par une portion centrale 26c. La première ailette latérale 26a s'étend sur au moins une partie de la face extrados 25a et la seconde ailette latérale 26b s'étend sur au moins une partie de la face intrados 25b. La portion centrale 26c recouvre le bord d'attaque 23. Avantageusement, la portion centrale 26c présente par exemple une épaisseur e1 telle que mesurée suivant une direction transversale à l'axe d'allongement Z supérieure à l'épaisseur e2, e3 respectivement des première et seconde ailettes latérales 26a, 26b. Les première et seconde ailettes latérales 26a, 26b sont effilées en direction du bord de fuite 24 de la pale 21 et épousent respectivement les faces intrados 25b et extrados 25a. Les épaisseurs e2, e3 des première et seconde ailettes latérales 26a, 26b sont décroissantes vers les extrémités longitudinales du bouclier de protection 26 opposées à la portion centrale 26c. En outre, comme mieux visible à titre d'exemple sur la figure 5, le bouclier de protection 26 comprend une cavité de réception 29. Le bord d'attaque 23 est agencé dans la cavité de réception 29. La cavité de réception 29 s'étend le long du bord d'attaque 23 suivant l'axe d'allongement Z. La cavité de réception 29 est délimitée latéralement par les première et seconde ailettes latérales 26a, 26b. Plus particulièrement, la cavité de réception 29 présente une forme générale en forme de U ou de V. La cavité de réception 29 comprend une première paroi formée par la première ailette latérale 26a, une seconde paroi formée par la seconde ailette latérale 26b et une paroi transversale 26d reliant les première et seconde parois latérales. Le bouclier de protection 26 permet de protéger le bord d'attaque 23 des chocs extérieurs par exemple et de l'usure.

Le bouclier de protection 26 est fixé sur la pale 21 par collage par exemple. L'aube 20 comprend ainsi une couche de colle 27 disposée entre le bouclier de protection 26 et la pale 21.

La couche de colle 27 présente une section en forme de U. La couche de colle 27 comprend une ailette extrados 27a agencée entre la face extrados 25a de la pale 21 et la première ailette latérale 26a du bouclier de protection 26 et une ailette intrados 27b agencée entre la face intrados 25b de la pale 21 et la seconde ailette latérale 26b du bouclier de protection 26. La couche de colle 27 comprend en outre une base centrale 27c reliant l'ailette extrados 27a et l'ailette intrados 27b. La base centrale 27c est agencée entre le bord d'attaque 23 et la portion centrale 26c du bouclier de protection 26.

La base centrale 27c présente une première épaisseur e1', telle que mesurée suivant une direction transversale à l'axe d'allongement Z, supérieure à des deuxième et troisième épaisseurs e2', e3' respectivement des ailettes extrados et intrados 27a, 27b. Les deuxième et troisième épaisseurs e2', e3' sont avantageusement identiques.

La première épaisseur e1' est par exemple comprise entre 1 mm et 10 mm. La deuxième épaisseur e2' est par exemple comprise entre 0.10 mm et 0.50 mm, préférentiellement comprise entre 0.10 mm et 0.35 mm. La troisième épaisseur e3' est avantageusement identique à la deuxième épaisseur e2'. La couche de colle 27 est par exemple en matériau polymérique préférentiellement choisi parmi les résines époxy. Le matériau polymérique présente une densité par exemple comprise entre 1g/cm3 et 2g/cm3.

Selon l'invention, l'aube 20 comprend au moins une cavité d'ajustement 28 s'étendant au moins en partie le long du bord d'attaque 23, suivant l'axe d'allongement Z.

Selon un mode de réalisation avantageux de l'invention, la cavité d'ajustement 28 s'étend sur au moins une partie de la hauteur du bord d'attaque 23 suivant l'axe d'allongement Z. Préférentiellement, la cavité d'ajustement 28 s'étend sur toute la hauteur du bord d'attaque 23 suivant l'axe d'allongement Z. La cavité d'ajustement 28 peut ainsi recevoir une plus grande quantité de matériau pour ajuster son poids moment radial de façon précise. Aussi, l'équilibre de l'aube 20 est assuré. La cavité d'ajustement 28 est fermée à ses extrémités longitudinales suivant l'axe d'allongement Z.

L'aube 20 comprend avantageusement au moins un premier matériau (non représenté) agencé dans la cavité d'ajustement 28. Le premier matériau est par exemple de la poudre La quantité du premier matériau est avantageusement comprise entre 5g et 50g, de préférence entre 5g et 30g, par exemple entre 10g et 30g et encore plus préférentiellement entre 10g et 20g. Le premier matériau présente une densité par exemple comprise entre 5g/cm³ et 15g/cm³. Le premier matériau est par exemple du plomb. Le premier matériau permet d'ajuster le poids moment radial de l'aube 20.

Afin d'ajuster avec plus de précision le poids moment radial de l'aube 20, et/ou de compléter l'espace restant de la cavité d'ajustement 28 pour éviter les mouvements du premier matériau dans celle-ci, l'aube 20 comprend optionnellement un second matériau (non représenté) agencé dans la cavité d'ajustement 28. Le second matériau présente une densité différente de la densité du premier matériau. Par exemple la densité du second matériau est plus faible que la densité du premier matériau. La quantité de la somme des premier et second matériaux est avantageusement comprise entre 0g et 20g, préférentiellement entre 5g et 20g et encore plus préférentiellement entre 10g et 20g. Le rapport entre la masse du premier matériau et du second matériau est compris entre 0 et 1.

Le second matériau est par exemple polymérique. Le matériau polymérique est choisi parmi les thermoplastiques ou les thermodurcissables, tel qu'une résine de type époxy. Le second matériau est par exemple identique au matériau de la couche de colle 27. Ceci permet de simplifier le procédé de fabrication puisque le comportement des matériaux est identique.

Selon un premier mode de réalisation représenté sur la figure 4, la cavité d'ajustement 28 est ménagée dans le bouclier de protection 26. Par exemple, la cavité d'ajustement 28 est ménagée dans la portion centrale 26c. Ceci permet ainsi d'ajuster le poids moment radial de l'aube 20 sans impacter la qualité de collage du bouclier de protection 26 sur la pale 21. En effet, la portion centrale 26c Aussi, la portion centrale 26c présente un profil sensiblement longiligne ce qui permet de facilement disposer d'une cavité d'ajustement 28 sur toute la longueur du bouclier de protection 26 et d'en réduire son maître couple afin de préserver les propriétés mécaniques du bouclier de protection 26.

La cavité d'ajustement 28 présente un axe central Y1 parallèle à l'axe d'allongement Z. La hauteur H de la cavité d'ajustement 28 mesurée selon son axe central Y1 est avantageusement comprise entre 100 mm et 500 mm, par exemple comprise entre 200 mm et 400 mm et préférentiellement de 350 mm. Préférentiellement, la cavité d'ajustement 28 selon cet exemple s'étend sur toute la hauteur de l'aube 20. La cavité d'ajustement 28 est en partie délimitée par la portion centrale 26c.

Comme illustré par exemple sur la figure 6, la cavité d'ajustement 28 présente une section transversale trapézoïdale. Le trapèze présente une hauteur L comprise entre 1 mm et 10 mm, par exemple comprise entre 1 mm et 5 mm et notamment comprise entre 2 mm et 4 mm, une base interne de longueur I2, comprise entre 1 mm et 10 mm, par exemple comprise entre 1 mm et 5 mm et notamment comprise entre 2 mm et 4 mm, et une base externe de longueur l1, comprise entre 1 mm et 10 mm, par exemple entre 1 mm et 5 mm et notamment comprise entre 2 mm et 4 mm. Les longueurs l1 et l2 peuvent être différentes afin d'adapter la forme de la cavité d'ajustement 28 à la géométrie du bouclier de protection 26, tel que représenté, ou de mêmes dimensions. Selon un exemple non représenté, la cavité d'ajustement 28 présente une section transversale circulaire, elliptique, ovoïde ou polygonale.

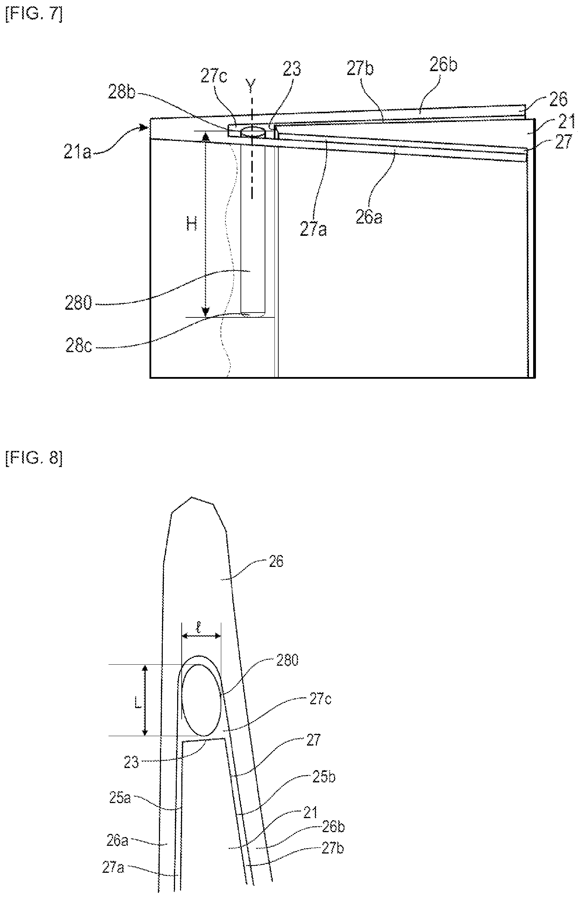

Selon un second mode de réalisation illustré par exemple sur la figure 7, la cavité d'ajustement 28 est ménagée dans la couche de colle 27. La cavité d'ajustement 28 est préférentiellement insérée dans la base centrale 27c.

Selon ce mode de réalisation, la cavité d'ajustement 28 est délimitée par un insert 280. L'insert 280 est creux. La cavité d'ajustement 28 est située dans l'insert 280. L'insert 280 est agencé dans l'épaisseur de la couche de colle 27, préférentiellement dans la base centrale 27c. En effet, la base centrale 27c est faiblement sollicitée et ne contribue que faiblement à la force de collage du bouclier de protection 26 sur la pale 21 contrairement aux ailettes extrados et intrados 27a, 27b. Ainsi, l'ajout de l'insert 280 dans cette partie de la couche de colle 27 n'impacte que faiblement la force de collage du bouclier de protection 26 sur la pale 21. Les propriétés de l'aube 20 sont préservées. Ainsi, ce mode de réalisation permet de fournir une aube 20 dont le poids moment radial peut être ajusté sans impacter ses propriétés mécaniques.

L'insert 280 s'étend au moins en partie le long du bord d'attaque 23 suivant l'axe d'allongement Z. L'insert 280 s'étend entre une extrémité longitudinale supérieure 28b et une extrémité longitudinale inférieure 28c opposée suivant l'axe d'allongement Z. L'insert 280 présente une forme cylindrique et allongée selon un axe de révolution Y. L'axe de révolution Y est parallèle à l'axe d'allongement Z. La hauteur H de l'insert 280 selon ce mode de réalisation, mesuré selon l'axe de révolution Y, est avantageusement comprise entre 100 mm et 200 mm, par exemple comprise entre 150 mm et 200 mm. L'insert 280 est par exemple en matériau polymérique. Le matériau polymérique est chimiquement compatible avec le matériau de la couche de colle 27.

Selon un premier exemple de réalisation représenté sur la figure 7, l'insert 280 présente une section transversale circulaire. Le diamètre interne de l'insert 280 est avantageusement compris entre 1 mm et 5 mm.

Selon un autre exemple de réalisation représenté sur la figure 8, l'insert 280 présente une section transversale elliptique. Selon ce mode de réalisation, l'insert 280 présente un grand diamètre L mesuré selon le grand axe par exemple compris entre 2 mm et 4 mm et un petit diamètre I mesuré selon le petit axe par exemple compris entre 2 mm et 4 mm. Le grand diamètre L est avantageusement supérieur au petit diamètre I.

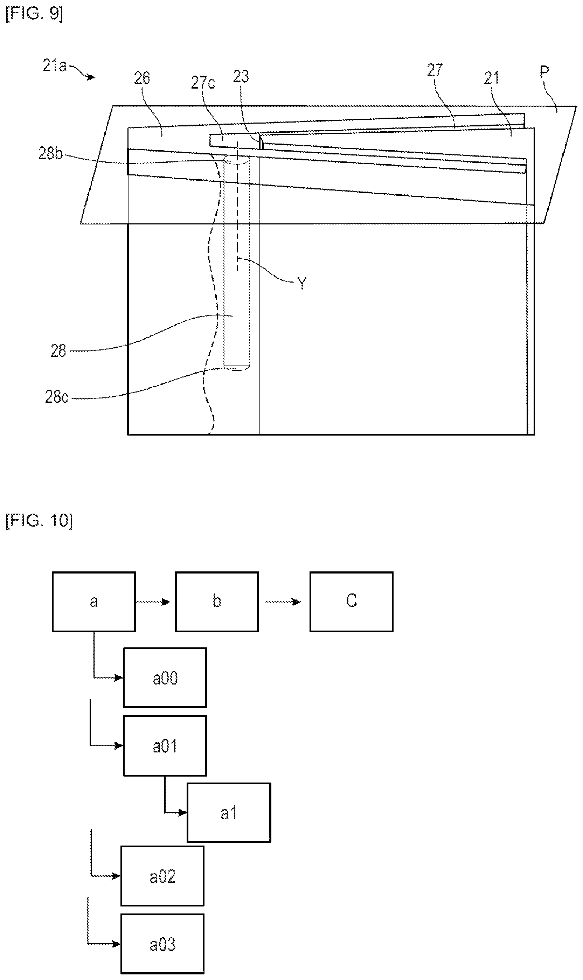

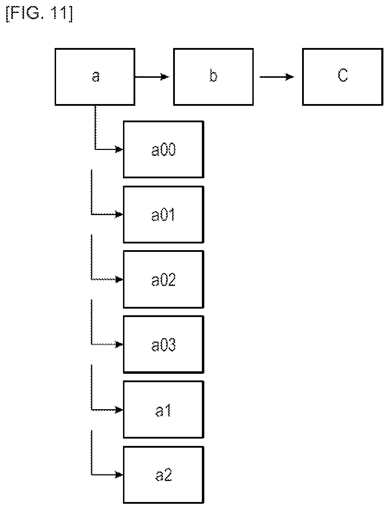

Un procédé de correction du poids moment radial de l'aube 20 va maintenant être décrit en référence aux figures 10 et 11.

Le procédé comprend une première étape (a) de fourniture de l'aube 20 telle que décrite ci-dessus. L'étape (a) de fourniture de l'aube 20 peut comprendre les sous-étapes suivantes :
(a00) fourniture de la pale 21,
(a01) fourniture du bouclier de protection 26,
(a02) application de la couche de colle 27,
(a03) collage du bouclier de protection 26 sur la pale 21, et
(a1) formation de la cavité d'ajustement 28 dans l'aube 20.

Les sous-étapes (a00) de fourniture de la pale 21 et (a01) de fourniture du bouclier de protection 26 peuvent être réalisées en parallèle.

Comme illustré sur la figure 10, selon le premier mode de réalisation dans lequel la cavité d'ajustement 28 est ménagée dans le bouclier de protection 26, la sous-étape (a1) de formation de la cavité d'ajustement 28 est réalisée lors de la sous-étape (a01) de fourniture du bouclier de protection 26. Par exemple, le bouclier de protection 26 est formé par pliage de tôles métalliques et soudage des extrémités transversales des tôles autour d'un élément de support pour former la cavité d'ajustement 28. L'élément de support est fugitif, c'est-à-dire qu'il est présent lors de cette sous-étape mais absent à la fin de l'étape (a). L'élément de support n'est donc pas présent dans l'aube 20.

Comme illustré sur la figure 11, selon le second mode de réalisation dans lequel la cavité d'ajustement 28 est ménagée dans la couche de colle 27, la sous-étape (a1) est avantageusement réalisée après la sous-étape (a03) de collage du bouclier de protection 26. Lors de la sous-étape (a1) l'insert 280 est agencé dans la couche de colle 27. Dans cette sous-étape, la cavité d'ajustement 28 est fermée à ses deux extrémités longitudinales. Comme illustré sur la figure 9, selon ce second mode de réalisation, après la sous-étape (a1), le procédé comprend une sous-étape (a2) de découpage ou retrait d'une portion d'extrémité de l'aube 20, opposée au pied 22, de façon à ouvrir l'extrémité supérieure de la cavité d'ajustement 28 opposée au pied 22. Le découpage est réalisé selon un plan de découpe P transversal à l'axe de révolution Y ou l'axe d'allongement Z de l'aube 20.

Dans l'étape (a), la cavité d'ajustement 28 débouche sur l'extrémité libre 21a de l'aube 20. Une telle configuration permet l'accès à la cavité d'ajustement 28 après la fabrication de l'aube 20 ce qui facilite l'ajustement de son poids moment radial.

Dans une seconde étape (b), une mesure du poids moment radial est effectuée.

Dans une troisième étape (c), le poids moment radial mesuré à l'étape (b) est comparé à une valeur de référence. Cette étape permet de déterminer l'ajustement nécessaire à réaliser pour atteindre la valeur de référence. Puis, le poids moment radial de l'aube 20 est ajusté en fonction du résultat de la comparaison. Selon l'invention, l'ajustement est réalisé par insertion du premier matériau dans la cavité d'ajustement 28.

Avantageusement, l'ajustement durant l'étape (c) est réalisé par insertion du second matériau dans la cavité d'ajustement 28 en combinaison avec le premier matériau. Ceci permet d'ajustement plus précisément le poids moment radial de l'aube 20 en utilisant des matériaux de densité différente. Aussi, l'insertion du second matériau permet de fermer la cavité d'ajustement 28. Une étape de polymérisation du second matériau peut être réalisée.

Ainsi, selon l'invention, il est possible d'ajuster le poids moment radial des aubes 20 de manière individuelle durant leur fabrication. Ceci permet d'homogénéiser ce paramètre lors de la fabrication et d'éviter la création d'un balourd sur le rotor de la soufflante par exemple après le montage des aubes 20 résultant d'une dispersion du poids moment radial des aubes 20. Il est par exemple possible d'ajuster le poids moment radial des aubes 20 d'au moins 5g.cm, par exemple de 5g.cm à 20g.cm et par exemple de 15g.cm.

## Revendications

1. Procédé de correction du poids moment radial d'une aube (20) pour une turbomachine (1) d'aéronef, le procédé comprenant les étapes suivantes :
(a) fournir une aube (20) s'étendant suivant un axe d'allongement Z entre une extrémité libre (21a) opposée à un pied (22), l'aube (20) comprenant une pale (21) en matériau composite présentant un bord d'attaque (23), un bord de fuite (24) relié au bord d'attaque (23) par une face extrados (25a) et une face intrados (25b) opposée à la face extrados (25a), l'aube (20) comprenant en outre un bouclier de protection (26) fixé sur le bord d'attaque (23),
(b) mesurer le poids moment radial de l'aube (20),
(c) comparer le poids moment radial mesuré à une valeur de référence et ajuster le poids moment radial de l'aube (20) en fonction du résultat de la comparaison, **caractérisé en ce que**, à l'étape (a), l'aube (20) comprend au moins une cavité d'ajustement (28) s'étendant le long du bord d'attaque (23) et débouchant sur l'extrémité libre (21a) de l'aube (20), et **en ce que**, à l'étape (c), l'ajustement est réalisé par insertion d'un premier matériau dans la cavité d'ajustement (28).

2. Procédé selon la revendication précédente, **caractérisé en ce que**, à l'étape (c) l'ajustement est réalisé par insertion d'un second matériau dans la cavité d'ajustement (28), la densité du premier matériau étant différente de la densité du second matériau.

3. Procédé selon la revendication 1 ou 2, **caractérisé en ce que** le premier matériau est du plomb.

4. Procédé selon l'une quelconque des revendications précédentes, **caractérisé en ce que** la quantité du premier matériau est comprise entre 5g et 50g, et de préférence entre 10g et 30g.

5. Procédé selon l'une quelconque des revendications précédentes, **caractérisé en ce que** la cavité d'ajustement (28) est ménagée dans le bouclier de protection (26).

6. Procédé selon la revendication précédente, **caractérisé en ce que** le bouclier de protection (26) comprend une première ailette latérale (26a) s'étendant sur au moins une partie de la face extrados (25a), une seconde ailette latérale (26b) s'étendant sur au moins une partie de la face intrados (25b), une portion centrale (26c) reliant les première et seconde ailettes latérales (26a, 26b) et s'étendant le long du bord d'attaque (23) suivant l'axe d'allongement (Z), la cavité d'ajustement (28) étant ménagée dans la portion centrale (26c).

7. Procédé selon la revendication précédente, **caractérisé en ce que** la cavité d'ajustement (28) s'étend sur toute la hauteur du bord d'attaque (23) suivant l'axe d'allongement Z.

8. Procédé selon l'une quelconque des revendications 1 à 4, **caractérisé en ce que** l'aube (20) comprend une couche de colle (27) disposée entre la pale (21) et le bouclier de protection (26), la cavité d'ajustement (28) étant ménagée dans la couche de colle (27).

9. Procédé selon l'une quelconque des revendications précédentes, **caractérisé en ce que** l'étape (a) comprend la sous étape (a1) suivante :
former la cavité d'ajustement (28) dans l'aube (20).

10. Procédé selon la revendication précédente, **caractérisé en ce que**, à la fin de la sous étape (a1), la cavité d'ajustement (28) présente une extrémité longitudinale supérieure (28b) opposée au pied (22) et une extrémité longitudinale inférieure (28c) opposée à l'extrémité longitudinale supérieure (28b) suivant l'axe longitudinale (Z) qui sont fermées, et **en ce que** le procédé comprend, après la sous étape (a1), la sous étape (a2) suivante :
découper ou retirer une portion d'extrémité de l'aube (20), opposée au pied (22), de façon à ouvrir l'extrémité longitudinale supérieure (28b) de la cavité d'ajustement (28).

## Patentansprüche

1. Verfahren zur Korrektur des radialen Momentgewichts einer Schaufel (20) für ein Turbotriebwerk (1) eines Flugzeugs, wobei das Verfahren die folgenden Schritte umfasst:
(a) Bereitstellen einer Schaufel (20), die sich einer Verlängerungsachse Z folgend zwischen einem freien Ende (21a) gegenüber einem Fuß (22) erstreckt, wobei die Schaufel (20) ein Blatt (21) aus Verbundmaterial umfasst, das eine Angriffskante (23), eine Abströmkante (24), die über eine Oberseite (25a) und eine Unterseite (25b) gegenüber der Oberseite (25a) mit der Angriffskante (23) verbunden ist, aufweist, wobei die Schaufel (20) weiter ein Schutzschild (26) umfasst, das an der Angriffskante (23) befestigt ist,
(b) Messen des radialen Momentgewichts der Schaufel (20),
(c) Vergleichen des gemessenen radialen Momentgewichts mit einem Referenzwert und Einstellen des radialen Momentgewichts der Schaufel (20) in Abhängigkeit von dem Vergleichsergebnis, **dadurch gekennzeichnet, dass** im Schritt (a) die Schaufel (20) mindestens einen Einstellungshohlraum (28) umfasst, der sich entlang der Angriffskante (23) erstreckt und zum freien Ende (21a) der Schaufel (20) führt, und dadurch, dass im Schritt (c) die Einstellung durch Einsetzen eines ersten Materials in den Einstellungshohlraum (28) durchgeführt wird.

2. Verfahren nach dem vorstehenden Anspruch, **dadurch gekennzeichnet, dass** im Schritt (c) die Einstellung durch Einsetzen eines zweiten Materials in den Einstellungshohlraum (28) durchgeführt wird, wobei die Dichte des ersten Materials sich von der Dichte des zweiten Materials unterscheidet.

3. Verfahren nach Anspruch 1 oder 2, **dadurch gekennzeichnet, dass** das erste Material Blei ist.

4. Verfahren nach einem der vorstehenden Ansprüche, **dadurch gekennzeichnet, dass** die Menge des ersten Materials zwischen 5 g und 50 g und vorzugsweise zwischen 10 g und 30 g beträgt.

5. Verfahren nach einem der vorstehenden Ansprüche, **dadurch gekennzeichnet, dass** der Einstellungshohlraum (28) im Schutzschild (26) eingerichtet ist.

6. Verfahren nach dem vorstehenden Anspruch, **dadurch gekennzeichnet, dass** das Schutzschild (26) einen ersten seitlichen Flügel (26a), der sich über mindestens einen Teil der Oberseite (25a) erstreckt, einen zweiten seitlichen Flügel (26b), der sich über mindestens einen Teil der Unterseite (25b) erstreckt, einen mittleren Abschnitt (26c) umfasst, der den ersten und den zweiten seitlichen Flügel (26a, 26b) verbindet und sich entlang der Angriffskante (23) der Verlängerungsachse (Z) folgend erstreckt, wobei der Einstellungshohlraum (28) im mittleren Abschnitt (26c) eingerichtet ist.

7. Verfahren nach dem vorstehenden Anspruch, **dadurch gekennzeichnet, dass** der Einstellungshohlraum (28) sich über die gesamte Höhe der Angriffskante (23) der Verlängerungsachse Z folgend erstreckt.

8. Verfahren nach dem einem der Ansprüche 1 bis 4, **dadurch gekennzeichnet, dass** die Schaufel (20) eine Klebeschicht (27) umfasst, die zwischen der Schaufel (21) und dem Schutzschild (26) angeordnet ist, wobei der Einstellungshohlraum (28) in der Klebeschicht (27) eingerichtet ist.

9. Verfahren nach einem der vorstehenden Ansprüche, **dadurch gekennzeichnet, dass** der Schritt (a) den folgenden Teilschritt (a1) umfasst:
Bilden des Einstellungshohlraum (28) in der Schaufel (20).

10. Verfahren nach dem vorstehenden Anspruch, **dadurch gekennzeichnet, dass** am Ende des Teilschritts (a1) der Einstellungshohlraum (28) ein oberes Längsende (27b) gegenüber dem Fuß (22) und ein unteres Längsende (28c) gegenüber dem oberen Längsende (28b) der Längsachse (Z) folgend aufweist, die geschlossen sind, und dadurch, dass das Verfahren nach dem Teilschritt (a1) den folgenden Teilschritt (a2) umfasst:
Ausschneiden oder Entfernen eines Endabschnitts der Schaufel (20), gegenüber dem Fuß (22), sodass das obere Längsende (28b) des Einstellungshohlraums (28) geöffnet wird.

## Claims

1. A method for correcting the radial moment weight of a vane (20) for an aircraft turbine engine (1), the method comprising the following steps:
(a) providing a vane (20) extending along an axis of elongation Z between a free end (21a) and opposite a root (22), the vane (20) comprising a blade (21) made of composite material and having a leading edge (23), a trailing edge (24) connected to the leading edge (23) by a suction side (25a) and a pressure side (25b) opposite the suction side (25a), the vane (20) further comprising a protective shield (26) attached to the leading edge (23),
(b) measuring the radial moment weight of the vane (20),
(c) comparing the measured radial moment weight with a reference value and adjusting the radial moment weight of the vane (20) as a function of the result of the comparison, **characterized in that**, in step (a), the vane (20) comprises at least one adjustment cavity (28) extending along the leading edge (23) and opening onto the free end (21a) of the vane (20), and **in that**, in step (c), the adjustment is carried out by inserting a first material into the adjustment cavity (28).

2. The method according to the preceding claim, **characterised in that** in step (c) the adjustment is carried out by inserting a second material into the adjustment cavity (28), the density of the first material being different from the density of the second material.

3. The method according to claim 1 or 2, **characterised in that** the first material is lead.

4. The method according to any one of the preceding claims, **characterised in that** the quantity of the first material is between 5g and 50g, and preferably between 10g and 30g.

5. The method according to any one of the preceding claims, **characterised in that** the adjustment cavity (28) is formed in the protective shield (26).

6. The method according to the preceding claim, **characterised in that** the protective shield (26) comprises a first lateral fin (26a) extending over at least part of the suction side (25a), a second lateral fin (26b) extending over at least part of the pressure side (25b), a central portion (26c) connecting the first and second lateral fins (26a, 26b) and extending along the leading edge (23) along the axis of elongation (Z), the adjustment cavity (28) being formed in the central portion (26c).

7. The method according to the preceding claim, **characterised in that** the adjustment cavity (28) extends over the entire height of the leading edge (23) along the axis of elongation Z.

8. The method according to any one of claims 1 to 4, **characterised in that** the vane (20) comprises an adhesive layer (27) disposed between the blade (21) and the protective shield (26), the adjustment cavity (28) being formed in the adhesive layer (27).

9. The method according to any one of the preceding claims, **characterized in that** step (a) comprises the following sub-step (a1):
forming the adjustment cavity (28) in the vane (20).

10. The method according to the preceding claim, **characterised in that**, at the end of sub-step (a1), the adjustment cavity (28) has an upper longitudinal end (28b) opposite the root (22) and a lower longitudinal end (28c) opposite the upper longitudinal end (28b) along the longitudinal axis (Z) which are closed, and **in that** the method comprises, after the sub-step (a1), the following sub-step (a2):
cutting or removing an end portion of the vane (20), opposite the root (22), so as to open the upper longitudinal end (28b) of the adjustment cavity (28).
